## Europäisches Patentamt

## European Patent Office

## Office européen des brevets

(19)

(11) Veröffentlichungsnummer: **0 178 511**
**B1**

(12) # EUROPÄISCHE PATENTSCHRIFT

(45) Veröffentlichungstag der Patentschrift:
**25.01.89**

(51) Int. Cl.⁴: **C 01 B 25/30**

(21) Anmeldenummer: **85112203.6**

(22) Anmeldetag: **26.09.85**

(54) Verfahren zur Herstellung vanadiumarmer Alkaliphosphatlösungen.

(30) Priorität: **15.10.84 DE 3437685**

(43) Veröffentlichungstag der Anmeldung:
**23.04.86 Patentblatt 86/17**

(45) Bekanntmachung des Hinweises auf die Patenterteilung:
**25.01.89 Patentblatt 89/4**

(84) Benannte Vertragsstaaten:
**BE DE FR GB NL**

(56) Entgegenhaltungen:
**DE-A-1 542 645**
**FR-A-2 342 249**

(73) Patentinhaber: **HOECHST AKTIENGESELLSCHAFT,**
**Postfach 80 03 20, D-6230 Frankfurt am Main 80**
**(DE)**

(72) Erfinder: **Kinneging, Johannes Wilhelmus,**
**Korendijk 38, NL- 4331 Middelburg (NL)**
Erfinder: **Roos, Wouter, Dorpsplein 30, NL- 4443**
**Nisse (NL)**
Erfinder: **Damman, Bernardus Johannes, Oude**
**Vlissingseweg 63, NL- 4336 Middelburg (NL)**
Erfinder: **Jelsma, Andries, Dr., Hogewei 34, NL-**
**4464 Goes (NL)**
Erfinder: **von Schenck, Raban, Dr., Ulmenstrasse**
**34, D-6238 Hofheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 178 511 B1

**Beschreibung**

Die vorliegende Erfindung betrifft ein Verfahren zur Herstellung vanadiumarmer Alkaliphosphatlösungen, die ein Alkalimetall/P-Molverhältnis von mindestens 1,9 : 1 aufweisen, aus vanadiumhaltigen Phosphorsäuren. Dabei wird das darin enthaltene Vanadium mit Hilfe eines Reduktionsmittels reduziert und die Säure in Gegenwart von Eisen(II)-Ionen in zwei Stufen mit Alkalihydroxiden und/oder -carbonaten bis zu dem im Endprodukt gewünschten Alkali/P-Molverhältnis neutralisiert und ausgefallener Feststoff von der entstandenen Alkaliphosphatlösung abgetrennt.

Dieser abgetrennte Niederschlag kann, sofern es erwünscht ist, durch Umsetzung mit den Alkalien aufgeschlossen und die entstandene Alkaliphosphatlösung vom ungelösten Rückstand abfiltriert werden, worauf letzterer verworfen und das Filtrat in den Prozeß zurückgeführt werden kann.

Ein solches Verfahren ist beispielsweise in der DE-A-2 600 329 beschrieben. Danach wird die Phosphorsäure zunächst mit Natrium-Hyroxymethansulfinat als Reduktionsmittel vorbehandelt und in der ersten Neutralisationsstufe bis zu einem Alkalioxid $P_2O_5$-Molverhältnis von 1,0 : 1 bis 1,8 : 1 neutralisiert. Der ausgefallene Niederschlag muß abgetrennt werden. Dann wird der erhaltenen Lösung ein Eisen(II)-Salz zugesetzt und die Neutralisation bis zu einem Alkalioxid : $P_2O_5$-Molverhältnis größer als 1,9 : 1 fortgeführt. Auch der bei diesem Schritt ausfallende Niederschlag muß durch eine weitere Filtration abgetrennt werden.

Nachteilig an dieser bekannten Arbeitsweise ist, daß zwischen den beiden Neutralisationsstufen zwingend eine Filtration des Niederschlages erfolgen muß, und daß aus den bei beiden Filtrationen erhaltenen Niederschlägen ein großer Teil des ausgefällten Vanadiums wieder in Lösung geht, wenn diese Niederschläge zur Rückgewinnung des in ihnen enthaltenen $P_2O_5$ mit Alkalien behandelt werden, so daß eine erneute Abtrennung des Vanadiums aus der Aufschlußlösung durch erneute Zugabe von Eisen(II)-Salzen durchgeführt werden muß, was außerdem mit Verlusten an $P_2O_5$ in Form von Eisenphosphat verbunden ist.

Überraschenderweise wurde nun gefunden, daß sich diese Nachteile vermeiden lassen, wenn man in den vanadiumhaltigen Phosphorsäuren durch Zugabe eines Reduktionsmittels ein negatives Redoxotential von weniger als -150 mV und durch Teilneutralisation ein Alkalimetall/P-Molverhältnis einstellt, das zwischen 0,85 und 1,0, vorzugsweise zwischen 0,94 und 0,98 liegt, wobei sich ein Redoxotential kleiner als -250 mV ergibt. Diese Teilneutralisation zu einem Molverhältnis, welches kleiner als 1,0 ist, hält man dann während mindestens 10 min. vorzugsweise länger als 1/2 Stunde, aufrecht und erhöht dann ohne Zwischenfiltration das Alkalimetall/P-Molverhältnis auf 1,9 bis 2,1 und trennt erst danach den gesammelten Niederschlag ab, der, sofern dies zur Verringerung von $P_2O_5$-Verlusten gewünscht wird, anschließend durch Umsetzung mit Alkalien aufgeschlossen wird.

Als Reduktionsmittel sind Eisenspäne, Ferro-Salze, Sulfide, Sulfite oder Hydroxymethansulfinate geeignet, vor allem aber Ferrosilicium oder Ferrophosphor. Insbesondere mit letzterem lassen sich die erforderlichen niedrigen Redoxpotentiale leicht erzielen und auch im neutralen und alkalischen Bereich ist er noch als Reduktionsmittel wirksam. Die Korngrößen von Ferrosilicium und von Ferrophosphor sollten weniger als 100 μm, besser jedoch weniger als 20 μm betragen.

Ferrosilicium und Ferrophosphor können auch in Verbindung mit Eisenspänen eingesetzt werden. Dies kann in erster Linie dann geschehen, wenn die eingesetzte rohe Phosphorsäure von sich aus nicht genügend Eisen enthält, um das Vanadium als Eisenvanadyl-Phosphat-Komplex quantitativ zu fällen. Der Eisen(II)-Gehalt der Lösung sollte mehr als 0,25 Gew.-% betragen.

Empfehlenswert ist es, den gesammelten, nach der zweiten Neutralisationsstufe abgetrennten Niederschlag anschliessend aufzuschließen. Dazu wird der im wesentlichen aus Metallphosphaten bestehende Niederschlag bei erhöhten Temperaturen mit Alkalien im Molverhältnis Alkalimetall/P größer 3,1 umgesetzt, wobei der größte Teil der Phosphate in Lösung geht und im wesentlichen nur der Eisen-Vanadyl-Phosphat-Komplex zurückbleibt. Dann wird vom Ungelösten abfiltriert und das Filtrat direkt in die erste Neutralisationsstufe zurückgeführt.

Dabei war es völlig überraschend, daß, im Gegensatz zu den bei den bekannten Arbeitsweisen nach der ersten und nach der zweiten Neutralisationsstufe erhaltenen Niederschlägen, aus dem erfindungsgemäß erhaltenen Niederschlag praktisch kein Vanadium wieder in Lösung geht, so daß eine direkte Rückführung des beim Aufschluß erhaltenen Filtrates in die erste Neutralisationsstufe möglich ist, während nach den bekannten eine erneute Ausfällung des Vanadiums, verbunden mit einer weiteren Filtration, erfolgen muß.

Ferner ist es empfehlenswert, die gesamte Umsetzug unter Inertgasatmosphäre, vorzugsweise Stickstoff, durchzuführen.

Durch die nachfolgenden Beispiele soll das erfindungsgemäße Verfahren erläutert, aber nicht auf den Gegenstand der Beispiele beschränkt werden.

Als Ausgangsprodukte wurden sogenannte "Grünsäuren" eingesetzt, die durch Naßaufschluß von Phosphaterzen mit Schwefelsäure gewonnen worden waren. Nach Zugabe des Reduktionsmittels stellte sich ein negatives Redoxpotential ein, das nach der ersten Neutralisation erheblich sank. Gleichzeitig reduzierte sich der Vanadium-Gehalt der Lösung unter Ausbildung eines Niederschlages. Die erhaltene Mischung wurde mindestens 1/2 Stunde gerührt, bevor ohne Zwischenfiltration die zweite Neutralisation durchgeführt wurde.

Nach der zweiten Neutralisation sank der Vanadiumgehalt der Lösung noch weiter ab. Anschließend wurde filtriert und der Filterkuchen in ein Waschfiltrat eingetragen, das ein $P_2O_5$-Gehalt von 5 - 7 Gew.-% und ein Na/P-Molverhältnis von etwa 4 aufwies. Diese Mischung wurde mit Alkalilauge versetzt, bei 95°C etwa 1 Stunde lang gerührt und danach filtriert.

2

# EP 0 178 511 B1

Das Filtrat mit einem Na/P-Molverhältnis, das größer 3,1 war, konnte aufgrund seines geringen Vanadiumgehaltes ohne Zwischenbehandlung direkt zur Verdünnung und Neutralisation in die 1. Neutralisationsstufe zurückgeführt werden.

## Beispiel 1

Reduktionsmittel 0,2 Gew.-% Fe-Späne und 0,2 Gew.-% Ferrophosphor 10 µm

| | Gew.-% $P_2O_5$ | Gew.-% Fe | Redox-Potential mV | Gew.-% V | Na/P-Mol-verhältnis | Gew.-% Na |
|---|---|---|---|---|---|---|
| Grünsäure | 46,1 | 0,23 | +430 | 0,058 | | |
| nach Reduktion | 46,1 | 0,45 | -150 | 0,058 | | |
| nach 1. Neutralisation | 24,5 | - | -310 | 0,0078 | 1,03 | |
| nach 2. Neutralisation | 18,6 | - | - | 0,0002 | 2,09 | |
| Aufschluß Filtrat | 6,7 | - | - | 0,0001 | 4,2 | |
| Aufschluß Filterkuchen | 11,8 | 11,1 | - | 1,49 | | 4,6 |

Ausbeute $P_2O_5$ 98,9 Gew.-%
Ausbeute Na 99,3 Gew.-%

## Beispiel 2

Reduktionsmittel 0,2 Gew.-% Fe-Späne und 0,2 Gew.-% Ferrophosphor 10 µm

| | Gew.-% $P_2O_5$ | Gew.-% Fe | Redox-Potential mV | Gew.-% V | Na/P-Mol-verhältnis | Gew.-% Na |
|---|---|---|---|---|---|---|
| Grunsäure | 46,1 | 0,23 | +430 | | | |
| nach Reduktion | 45,0 | 0,41 | -120 | 0,0541 | 0,12 | |
| nach 1. Neutralisation | 23,6 | 0,32 | -220 | 0,0088 | 0,99 | |
| nach 2. Neutralisation | 17,8 | | | 0,0005 | 2,06 | |
| Aufschluß Filtrat | 6,8 | | | <0,0001 | 3,37 | |
| Aufschluß Filterkuchen | 14,45 | 12,0 | | 1,29 | | 2,49 |

Ausbeute $P_2O_5$ 98,7 Gew.-%
Ausbeute Na 99,7 Gew.-%

## Beispiel 3

Reduktionsmittel 0,2 Gew.-% Fe-Späne und 0,4 Gew.-% Ferrophosphor 10 µm

| | Gew.-% $P_2O_5$ | Gew.-% Fe | Redox-Potential mV | Gew.-% V | Na/P-Mol-verhältnis | Gew.-% Na |
|---|---|---|---|---|---|---|
| Grünsäure | 50,0 | | +420 | 0,0398 | 0,01 | |
| nach Reduktion | 49,7 | 0,39 | -124 | 0,0393 | | |
| nach 1. Neutralisation | 24,0 | 0,17 | -340 | 0,0115 | 0,945 | |
| nach 2. Neutralisation | 20,6 | | | 0,0001 | 2,05 | |
| Aufschluß Filtrat | 5,5 | | | <0,0001 | 3,34 | |
| Aufschluß Filterkuchen | 16,95 | 13,8 | | 1,08 | | 6,53 |

Ausbeute $P_2O_5$ 98,8 Gew.-%
Ausbeute Na 99,3 Gew.-%

## Beispiel 4

Reduktionsmittel 0,2 Gew.-% Fe-Späne und 0,4 Gew.-% Ferrophosphor 10 µm

3

| | Gew.-% P$_2$O$_5$ | Gew.-% Fe | Redox-Potential mV | Gew.-% V | Na/P-Mol-verhältnis | Gew.-% Na |
|---|---|---|---|---|---|---|
| Grünsäure | 50,0 | | +420 | 0,0398 | 0,01 | |
| nach Reduktion | 49,7 | 0,39 | -125 | 0,0376 | | |
| nach 1. Neutralisation | 22,8 | 0,15 | -320 | 0,0065 | 1,025 | |
| nach 2. Neutralisation | 18,3 | | | 0,0001 | 2,04 | |
| Aufschluß Filtrat | 6,7 | | | <0,0001 | 3,27 | |
| Aufschluß Filterkuchen | 15,5 | 15,1 | | 1,19 | | 3,06 |

Ausbeute P$_2$O$_5$ 99,0 Gew.-%
Ausbeute Na 99,7 Gew.-%

**Beispiel 5**

Reduktionsmittel 0,2 Gew.-% Fe-Späne und 0,2 Gew.-% Ferrophosphor 10 μm

| | Gew.-% P$_2$O$_5$ | Gew.-%Fe | Redox-Potential mV | Gew.-% V | Na/P-Mol-verhältnis | Gew.-% Na |
|---|---|---|---|---|---|---|
| Grünsäure | 50,0 | | | | | |
| nach Reduktion | 47,3 | 0,54 | -70 | 0,0652 | | |
| nach 1. Neutralisation | 23,8 | 0,22 | -200 | 0,0112 | 0,945 | |
| nach 2. Neutralisation | 17,7 | | | 0,0008 | 2,03 | |
| Aufschluß Filtrat | 6,5 | | | 0,0031 | 3,28 | |
| Aufschluß Filterkuchen | 10,23 | 12,7 | | 1,32 | | 3,36 |

**Beispiel 6**

Reduktionsmittel 0,7 Gew.-% Ferrophosphor 10μm

| | Gew.-% P$_2$O$_5$ | Gew.-%Fe | Redox-Potential mV | Gew.-% V | Na/P-Mol-verhältnis | Gew.-% Na |
|---|---|---|---|---|---|---|
| Grünsäure | 46,8 | 0,28 | +460 mV | 0,0640 | | |
| nach Reduktion | 45,5 | 0,42 | -180 mV | 0,0610 | | |
| nach 1. Neutralisation | 23,0 | 0,24 | -356 mV | 0,0120 | 0,961 | |
| nach 2. Neutralisation | 17,8 | | | 0,0002 | 2,04 | |
| Aufschluß Filtrat | 3,28 | | | 0,0003 | 3,28 | |
| Aufschluß Filterkuchen | 19,3 | 16,4 | | 1,40 | | 1,47 |

Ausbeute P$_2$O$_5$ 98,6 %
Ausbeute Na 99,7 %

**Beispiel 7 (Vergleichsbeispiel)**

| | Gew.-% P$_2$O$_5$ | Gew.-% Fe | Gew.-% V | Na/P-Mol-verhältnis |
|---|---|---|---|---|
| Grünsäure | 48,7 | 0,24 | 0,0350 | |
| nach Dosierung von Eisen II-sulfatlösung als Reduktionsmittel und Verdünnung | 26,2 | 0,25 | 0,0187 | 0,55 |
| nach 1 Neutralisation und Filtration | 21,2 | - | 0,0008 | 1,23 |
| nach 2. Neutralisation und Filtration | 18,2 | - | 0,0006 | 1,96 |
| Aufschluß Filtrat | 9,4 | - | 0,0320 | ~ 2,9 |
| Aufschluß Filterkuchen | 28 - 30 | | 0,06 | |
| Filtrat des Aufschlusses nach Neutralisation mit Grunsäure bis pH 6 und 2. Eisendosierung und Filtration | 11,5 | 0,0182 | 0,0030 | 1,56 |
| Filterkuchen von Vanadiumentfernung aus Filtrat des Aufschlusses | 40 | | 0,45 | |

Ausbeute P$_2$O$_5$ 90 - 92 Gew.-%

# EP 0 178 511 B1

## Patentansprüche

1. Verfahren zur Herstellung vanadiumarmer Alkaliphosphatlösungen aus vanadiumhaltigen Phosphorsäuren durch Reduktion des darin enthaltenen Vanadiums mit Hilfe eines Reduktionsmittels, Fällung des reduzierten Vanadiums in Gegenwart von Eisenionen durch eine zweistufige Neutralisation der Phosphorsäuren mit Alkalihydroxiden und/oder -carbonaten und Abtrennen des erhaltenen Niederschlags, der im gewünschten Falle durch Umsetzung mit Alkalien aufgeschlossen wird, dadurch gekennzeichnet, daß man in den Phosphorsäuren durch Zugabe des Reduktionsmittels ein negatives Redoxpotential und durch Teilneutralisation ein Alkalimetall/P-Molverhältnis zwischen 0,85 und 1,0 einstellt, sodaß sich ein Alkalimetall/P-Molverhältnis von kleiner 1 und ein Redoxpotential von kleiner -250 mV ergeben diese Teilneutralisation während einer Verweilzeit von mindestens 10 min aufrechterhält, dann ohne Zwischenfiltration das Alkalimetall/P-Molverhältnis in der zweiten Neutralisationsstufe auf 1,9 bis 2,1 erhöht, erst danach den gesammelten Niederschlag abtrennt und diesen gegebenenfalls aufschließt.

2. Verfahren nach Anspruch 1, dadurch gekennzeichnet, daß man als Reduktionsmittel Ferrosilicium oder Ferrophosphor einsetzt.

3. Verfahren nach Anspruch 2, dadurch gekennzeichnet, daß man Ferrosilicium oder Ferrophosphor in einer Korngröße kleiner als 100 $\mu$m einsetzt.

4. Verfahren nach einem der Ansprüche 1 bis 3, dadurch gekennzeichnet, daß man als Reduktionsmittel Eisenspäne, Ferrosulfat, Sulfide, Sulfite oder Hydroxymethansulfinate einsetzt.

5. Verfahren nach einem der Ansprüche 1 bis 4, dadurch gekennzeichnet, daß man in der Säure ein Redoxpotential kleiner -150 mV einstellt.

6. Verfahren nach einem der Ansprüche 1 bis 5, dadurch gekennzeichnet, daß man zunächst durch Teilneutralisation ein Alkalimetall/P-Molverhältnis von 0,94 bis 0,90 einstellt.

7. Verfahren nach einem der Ansprüche 1 bis 6, dadurch gekennzeichnet, daß man nach der Teilneutralisation eine Verweilzeit von mehr als 1/2 Stunde einhält.

8. Verfahren nach einem der Ansprüche 1 bis 7, dadurch gekennzeichnet, daß man den abgetrennten Niederschlag durch Umsetzung mit Alkalien bei einem Alkalimetall/P-Molverhältnis größer als 3,1 aufschließt, vom nicht gelösten Anteil abfiltriert und das Filtrat direkt in die erste Neutralisationsstufe zurückführt.

9. Verfahren nach einem der Ansprüche 1 bis 8, dadurch gekennzeichnet, daß man die Umsetzung unter Inertgasatmosphäre durchführt.

## Claims

1. A process for the production of low-vanadium alkali metal phosphate solutions from vanadium-containing phosphoric acids by reducing the vanadium present therein with the aid of a reducing agent, precipitating the reduced vanadium in the presence of iron ions by neutralizing the phosphoric acid in two steps using alkali metal hydroxides and/or alkali metal carbonates, and removing the precipitate obtained, and digesting the latter, if desired, by reaction with alkalis, wherein a negative redox potential and an alkali metal: P molar ratio between 0.85 and 1.0 are produced in the phosphoric acids by adding the reducing agent and by partial neutralization respectively, so that an alkali metal: P molar ratio of less than 1 and a redox potential of less than -250 mV are produced, this partial neutralization is maintained for a residence time of at least 10 minutes, the alkali metal: P molar ratio in the second neutralization step is increased to 1.9 to 2.1 without intermediate filtration, and only then is the filtrate collected removed and digested if desired.

2. The process as claimed in claim 1, wherein the reducing agent employed is ferrosilicon or ferrophosphorus.

3. The process as claimed in claim 2, wherein ferrosilicon or ferrophosphorus is employed in a grain size less than 100 $\mu$m.

4. The process as claimed in any of claims 1 to 3, wherein the reducing agent employed is iron turnings, ferrosulfale, sulfides, sulfites or hydroxymethane sulfinates.

5. The process as claimed in any of claims 1 to 4, wherein a redox potential of less than -150 mV is produced in the acid.

6. The process as claimed in any of claims 1 to 5, wherein an alkali metal: P molar ratio of 0.94 to 0.98 is initially produced by partial neutralization.

7. The process as claimed in any of claims 1 to 6, wherein a residence lime of more than 1/2 hour is maintained after the partial neutralization.

8. The process as claimed in any of claims 1 to 7, wherein the precipitate removed is digested by reaction with alkalis at an alkali metal: P molar ratio of greater than 3.1, the insoluble content is filtered off and the filtrate is recycled directly into the first neutralization step.

9. The process as claimed in any of claims 1 to 8, wherein the reaction is carried out under an inert gas atmosphere.

**Revendications**

1. Procédé pour la fabrication de solutions de phosphates alcalins pauvres en vanadium à partir d'acides phosphoriques contenant du vanadium par réduction du vanadium qu'ils contiennent au moyen d'un réducteur, précipitation du vanadium réduit en présence d'ions fer par une neutralisation en deux étapes des acides phosphoriques par des hydroxydes et/ou carbonates alcalins et séparation du précipité obtenu qui est attaqué, si on le désire, par réaction avec des alcalis, caractérisé en ce que l'on ajuste dans les acides phosphoriques un potentiel d'oxydoréduction négatif par addition d'un agent réducteur et un rapport molaire métal alcalin/P compris entre 0,85 et 1,0 par neutralisation, ce qui donne un rapport molaire métal alcalin/P de moins de 1 et un potentiel d'oxydoréduction de moins de - 250 mV, on maintient cette neutralisation partielle pendant une durée de séjour d'au moins 10 minutes, puis on élève sans filtration intermédiaire le rapport molaire métal alcalin/P à 1,9 - 2,1 dans une seconde étape de neutralisation, et ensuite seulement on sépare le précipité assemblé et éventuellement on l'attaque.

2. Procédé selon la revendication 1, caractérisé en ce que l'on utilise comme agent réducteur le ferrosilicium ou le ferrophosphore.

3. Procédé selon la revendication 2, caractérisé en ce que l'on utilise le ferrosilicium ou le ferrophosphore a une grosseur de grains de moins de 100 µm.

4. Procédé selon l'une quelconque des revendications 1 à 3, caractérisé en ce que l'on utilise comme agent réducteur des copeaux de fer, du sulfate ferreux, des sulfures, des sulfites ou des hydroxyméthanesulfinates.

5. Procédé selon l'une quelconque des revendications 1 à 4, caractérisé en ce que l'on ajuste dans l'acide un potentiel d'oxydoréduction de moins de - 150 mV.

6. Procédé selon l'une quelconque des revendications 1 à 5, caractérisé en ce que l'on ajuste d'abord par neutralisation partielle un rapport molaire métal alcalin/P de 0,94 - 0,98.

7. Procédé selon l'une quelconque des revendications 1 à 6, caractérisé en ce que l'on maintient après la neutralisation partielle une durée de séjour de plus d'une demi-heure.

8. Procédé selon l'une quelconque des revendications 1 à 7, caractérisé en ce que l'on attaque le précipité séparé par réaction avec des alcalis à un rapport molaire métal alcalin/P supérieur à 3,1, on sépare par filtration la fraction insoluble et on recycle directement le filtrat dans la première étape de neutralisation.

9. Procédé selon l'une quelconque des revendications 1 à 8, caractérisé en ce que l'on met en oeuvre la réaction en atmosphère de gaz inerte.